# EUROPEAN PATENT APPLICATION

(11) **EP 1 065 500 A1**
(43) Date of publication of application: **03.01.2001**
(21) Application number: 00202205.1
(22) Date of filing: 23.06.2000
(51) Int. Cl.: G01N 27/30

(54) **Sensor housing**

(30) Priority: 23.06.1999 NL 1012421
(71) Applicant: Yokogawa Electric Corporation, Tokyo 180-8750 (JP)
(72) Inventor: Lenferink, Joris Robert Jan, 6844 GC Arnhem (NL); Tesson, Adelbert Hermanus, 8539 RX Echtenerbrug (NL)
(74) Representative: de Bruijn, Leendert C.

(57) **Abstract**

Sensor housing (1) for accommodating at least one electrode (9; 10; 11) which can be brought into electrochemical contact with a process fluid, the sensor housing (1) being sealable by means of a porous seal (8) by which an inner chamber is formed between an internal surface of the sensor housing (1), the external surface of the at least one electrode (9; 10; 11) and the surface of the porous seal (8), the inner chamber being able to be filled with a first electrolyte. The sensor housing (1) further comprises deformable sections (7) so that the volume of the inner chamber is variable. An electrochemical sensor (15) which is provided with a sensor housing (1) is temperature-resistant and pressure-proof over a wide range.

## Description

The present invention relates to a sensor housing for accommodating at least one electrode which can be brought into electrochemical contact with a process fluid via a porous opening by which an inner chamber is formed between an internal surface of the sensor housing and the external surface of the at least one electrode, the inner chamber being able to be filled with a first electrolyte. A sensor housing of this type is disclosed by US Patent US-A-4,128,468 which describes an ion-sensitive electrode structure which can be used, for example, for measuring the pH of a process fluid. This structure comprises a tubular housing which encompasses a glass electrode and a reference electrode. The housing is sealed on one side by means of a sealing annulus through which the signal leads of the electrodes are run out. The other side of the housing can be brought into contact with the process fluid to be measured. This side of the housing is sealed by a plug of porous material, for example porous polytetrafluoroethene (PTFE). Via the porous plug, the reference electrode is in electrochemical contact with the process fluid. Located in the plug is a passage into which the glass electrode can be pushed, with the result that the sensitive end of the glass electrode projects outwards at the process side of the housing.

The process industry generally makes use of a thickened electrolyte in the pH sensor, to prevent unduly rapid loss of electrolyte, particularly when a relatively highly porous material is used for the plug serving as the liquid junction. Owing to the relatively large pore size (about 10 microns) of the porous PTFE material of the plug, unduly rapid loss of electrolyte can occur if the electrolyte is not sufficiently viscous, thereby significantly limiting the service life of the pH sensor. The thickened electrolyte has the drawback, however, that its volume increases relatively markedly with increasing temperature. The volume increase can be in the order of magnitude from 5% to 10%. If the walls of the housing which hold the thickened electrolyte are stiff, and if the temperature coefficient of the material of the housing is such that the increase in volume of the housing is less than that of the electrolyte, this will result in considerable pressure building up in the sensor, which may lead to rupture of the sensor housing, to the plug being pushed away, or to loss of electrolyte. In the first two cases, electrolyte would disappear from the sensor and the sensor would no longer be usable as a result. In the third case, a decrease in temperature will result in the ingress of process fluid to make up the loss of electrolyte, thereby contaminating the electrolyte. This would lead to uncalibrated operation of the pH sensor which consequently would produce an unreliable reading.

It is therefore an objective of the present invention to provide a sensor housing, e.g. for a pH sensor, which is entirely temperature-resistant and pressure-proof, i.e. that over the entire specified pressure and temperature range of the sensor no process fluid will be able to penetrate the sensor in the event of pressure and temperature variations which could cause contamination of the electrolyte.

This object is achieved by a sensor housing of the type defined in the preamble, characterized in that the sensor housing comprises deformable sections so that the volume of the inner chamber is variable.

One advantage of the sensor is that any expansion, caused by a higher temperature of the process fluid, of the thickened electrolyte is absorbed by the deformable sections of the sensor housing. As a result of outward deformation of the deformable sections, the internal volume of the sensor increases, and no pressure build-up within the housing will occur. Consequently, no leakage of electrolyte with the possible consequence of contamination of the electrolyte upon subsequent cooling of the sensor will take place.

US Patent US-A-4,659,451 discloses a reference electrode for measurement in fluids under high pressure. Such a reference electrode can form part of a pH measuring circuit. The reference electrode is provided with an internal, liquid-containing body, the internal body having an internal liquid-containing space therein and a liquid junction one side of which is exposed to the process fluid to be tested and the other side of which is exposed to the liquid contained in the liquid-containing space. Flexible bellows are provided between the spaces and are in contact with the internal liquid-containing body in order to compensate for the pressure of the high-pressure liquid which is exerted on the internal liquid via the liquid junction. All of this is accommodated in a sensor housing which per se is entirely rigid.

The flexible bellows are designed to transmit the pressure of the process fluid to the inside of the reference electrode. To this end, the pressure of the process fluid needs to be transmitted via a capillary to the flexible bellows. This capillary can easily become fouled by the process fluid, as a result of which the pressure is not transmitted or not in its entirety. Moreover, in this sensor various junctions are present where various parts of the sensor are fastened to one another, for example the flexible bellows which are fastened to the glass reference electrode by fastening means. These fastenings inherently form a weak point of the sensor.

US Patent US-A-4,406,766 discloses a pH sensor for measuring the pH of a process fluid under elevated temperature and pressure, where the sensitive parts of the measuring electrodes are not exposed to the high temperature and where no contamination of internal electrolyte occurs upon pressure changes in the process fluid. This is achieved by the sensitive parts of the measuring sensors being arranged at a distance from that end of the pH sensor which comes into contact with the process fluid. Attachment of the pH sensor to a vessel or something similar containing the process fluid is effected by means of a number of thermal barriers, so that the sensitive parts of the pH sensor remain at roughly ambient temperature. Attached to those ends of the glass electrode and reference electrode which are at a distance from that end of the pH sensor which comes into contact with the process fluid are deformable wall bodies contained in a chamber. Via a capillary, the pressure of the process fluid can be transmitted to the chamber, the pressure of the process fluid thereby being transmitted at the same time via the deformable wall bodies to the electrolyte present in the glass electrode and reference electrode. Consequently, the internal pressure of the glass electrode and the reference electrode is equal to the pressure in the process fluid.

This known pH sensor has a number of drawbacks. Firstly, the deformable wall bodies are made of a material different from that of the glass electrode and reference electrode, which means that the junction is inherently weak. Furthermore, the pH sensor is provided with a capillary for transmitting the pressure. This capillary can easily become blocked, resulting in (partial) loss of pressure compensation, which in turn entails the risk of fracture or leakage of the electrolyte.

In a preferred embodiment of the sensor housing according to the present invention, the sensor housing including the deformable sections is made of one material. This allows for simple fabrication of the sensor housing. The absence of junctions between different materials prevents the risk of occurrence of fractures or leaks in the housing.

In a further embodiment of the sensor housing according to the present invention, the material of the sensor housing, with the exception of the deformable sections, has a second material added thereto. This second material can be a stiffening material which ensures a stiffer and more robust sensor housing, while the deformable sections remain sufficiently flexible to provide a variable internal volume.

In an embodiment of the sensor housing according to the present invention, the housing including the deformable sections is made in one piece. As this means that no junctions are present between parts of the sensor housing, the sensor housing has no inherent weaknesses and is more resistant to external influences.

In a further embodiment, the deformable sections are located on that section of the housing which during operation comes into contact with the process fluid. This allows the pressure of the process fluid to be transmitted via the deformable sections to the internal volume of the sensor housing, as a result of which no pressure differentials will occur between the inner chamber of the sensor housing and the process fluid. This way of avoiding a capillary means that a sensor which makes use of the present sensor housing is not vulnerable to become blocked.

Preferably, in an embodiment of the sensor housing, the housing is provided with bracing ribs at the location of the deformable sections. As a result, the sensor housing becomes more rigid, which means that it can be attached more readily and without the risk of damage within e.g. a process vessel. Furthermore, this also means better protection of the electrodes placed within the sensor housing, for example a glass electrode and a reference electrode which generally consist of rigid glass parts.

In a preferred embodiment, the material of which the sensor housing is made is resistant to chemicals. Preferably, the sensor housing is constructed from a plastic resistant to chemicals, for example from PVDF, which offers good resistance up to pH values of 12 and above, depending on the temperature.

In a further embodiment, the deformable sections are formed by local attenuations of the wall of the sensor housing. Preferably, the deformable section has a maximum thickness of 0.50 mm, for example a thickness of 0.25 mm. This provides adequate deformability of the sensor housing to absorb variations in volume of the inner chamber. At the same time it is possible to use standard fabrication techniques to fabricate a sensor housing of these thicknesses.

A second aspect of the invention relates to a sensor provided with a sensor housing according to the present invention. One embodiment relates to a pH sensor comprising a reference electrode which is located in the inner chamber of the sensor housing.

In a second embodiment, the sensor further comprises a glass electrode in order to measure the pH of a process fluid. To this end, the porous seal can be provided with a passage into which the glass electrode fits precisely.

A third embodiment relates to a sensor which is additionally provided with a temperature sensor disposed in the sensor housing.

A fourth embodiment of the sensor is additionally provided with a ORP electrode or a so-called liquid-earth electrode which is disposed in the sensor housing and whose contact projects through the porous seal, thus allowing it to come into contact with the process fluid. The liquid earth can also be used for diagnostics relating to action of the sensor during operation.

A third aspect of the present invention relates to a method of fabricating the sensor housing according to the present invention. For example, the sensor housing can be fabricated via an injection-moulding procedure.

Alternatively, the sensor housing can be fabricated via a vacuum-forming method.

The deformable sections of the sensor housing can be fabricated integrally, and alternatively the deformable sections can be fabricated by partial removal of the material. An alternative fabrication approach is to apply the deformable sections in a further procedural step by means of welding techniques, as a result of which a sensor housing is obtained in one piece, a section being deformable so that a variable internal volume is obtained. Applying a deformable section in a further procedural step, thus allowing a sensor housing having a variable internal volume to be obtained, can also be effected by making use of a glued joint.

The present invention will now be described in more detail with reference to a preferred embodiment of the present invention, referring to the accompanying drawings, in which
Figure 1 shows a cross section of a preferred embodiment of the sensor housing according to the present invention;
Figure 2 shows cross sections of elements which can be fitted within the sensor housing to form a pH sensor;
Figure 3 shows a cross-sectional view of a pH sensor provided with a sensor housing according to the invention;
Figure 4 shows a side view of part of the sensor housing according to an embodiment of the present invention;
Figure 5 shows a side view of part of the sensor housing according to a further embodiment of the present invention; and
Figure 6 shows a cross-sectional view of the sensor housing in Figure 4 along the line VI-VI.

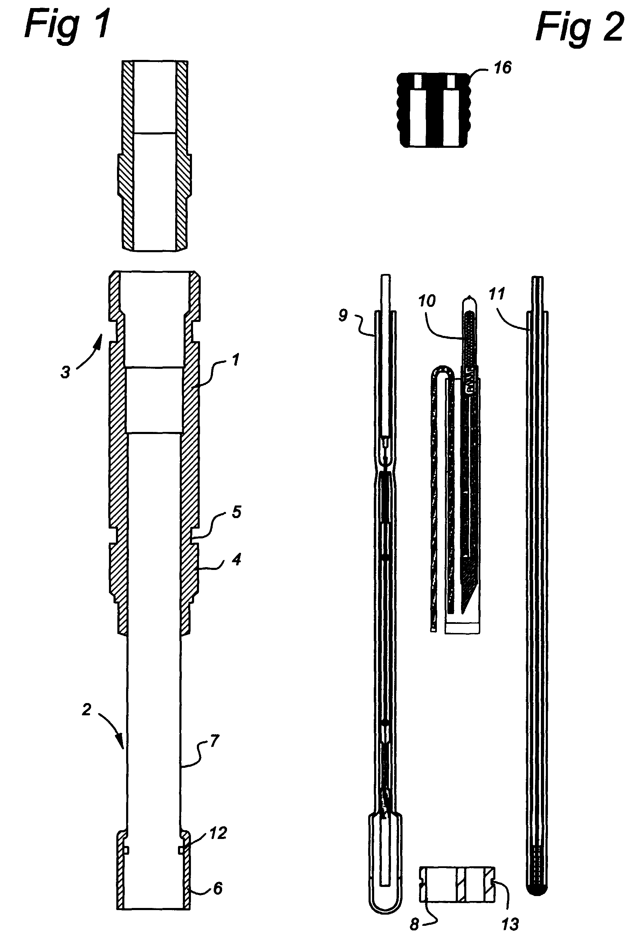

Figure 1 shows a cross section of a preferred embodiment of the sensor housing 1 according to the present invention. The sensor housing 1 preferably is of tubular design having a process side 2 and a connection side 3. The sensor housing can be fastened, by means of a non-tapering screw thread 4, in an opening of e.g. a process vessel (not shown). The sensor housing 1 is further provided with a groove 5 into which an O-ring can be fitted to make the connection of the sensor housing 10 to the process vessel fluid-tight. At the process side end 2, the sensor housing 1 is provided with a protective collar 6 which serves to protect the electrode sections which project from the sensor housing. The section of the sensor housing 1 between the screw thread 4 and the protective collar 6 is provided with deformable sections 7 which allow the volume within the sensor housing 1 to increase and decrease.

Figure 2 shows cross sections of elements which can be fitted within the sensor housing to form e.g. a pH sensor 15. A porous seal 8 can for example be fitted on the inside of the protective collar 6 to form a liquid junction between the process fluid and an electrolyte contained in the inner chamber of the sensor housing 1. The porous seal 8 has an O-ring groove which, once an O-ring is in place, forms a fluid-tight seal. In an embodiment of the sensor housing 1 according to the present invention, the protective collar 6 is provided on the inside with a rim 12 which at the top of the porous seal 8 is able to engage e.g. a groove 13, as a result of which the porous seal 8 can readily be fastened in the sensor housing 1 so as to provide a good seal.

Also provided can be a glass electrode 9 whose membrane glass projects through an opening in the porous seal in order to come into contact with the process fluid. Said glass electrode 9 can, for example, be a glass electrode having a silver/silver chloride collector pin in a pH-buffered KCl solution, as known to those skilled in the art. To form a combined pH electrode 15, the sensor housing should further comprise a separate reference electrode 10 or alternatively at least a reference collector pin of e.g. silver/silver chloride in a KCl solution which is present in the sensor housing 1, as known to those skilled in the art. The reference electrode 10 in the embodiment shown need not be in direct contact with the process fluid. The reference electrode 10 shown is placed in a so-called salt bridge which is formed by sensor housing 1. The electrochemical connection in this case runs from the process fluid via the liquid junction 8, the electrolyte present in the sensor housing 1, the second liquid junction in the reference electrode 10 and the electrolyte in the reference electrode to the collector point (the pin) of the reference electrode. In addition, the pH sensor 15 can further comprise a temperature sensor combined with a liquid earth 11, the latter of which, exactly like the glass electrode 9, can come into contact with the process fluid via an opening in the porous seal 8. The temperature sensor 11 measures the temperature of the process fluid, and the liquid earth forms a well-defined earth for a stable pH measuring circuit. The liquid earth can also be used for on-line diagnostics concerning the action of the entire pH sensor 15. The various electrodes 9, 10 and 11 are fastened within the sensor housing 1 with the aid of a sealing plug 16 which can be fitted on the connection side 3 of the sensor housing 1 and which seals the internal volume of the sensor housing 1.

As described above, the porous seal 8 is provided with one or more openings through which the respective electrodes 9, 11 present in the sensor housing 1 can project outwards to be able to come into contact with the process fluid. The openings in the porous seal 8 are matched to the electrodes 9, 11 so as to form an adequate fluid-tight seal at the contact faces. Alternatively, use can be made of grooves and matching O-rings to seal the various junctions between electrodes 9, 10 and 11 and the porous seal 8. As a result, diffusion is the only way in which process fluid can penetrate into the inner chamber and contaminate the electrolyte present therein, potentially leading to incorrect measurement or a defective pH sensor 15. At the same time, the electrolyte present in the sensor housing 1 is prevented from leaking out along the contact faces.

The chamber defined by the inner wall of the sensor housing 1, the outsides of the various electrodes 9, 10, 11, the sealing plug 16 and the porous seal 8 is filled with an electrolyte. To prevent the electrolyte from leaking out too rapidly through the porous seal 8, use is customarily made of a thickened electrolyte, generally a thickened, supersaturated KCl solution. Examples of thickeners used include hydroxyethyl cellulose (HEC), polyethylene glycol (PEG), polyvinyl alcohol (PVA) or polyacrylamide) (PAA).

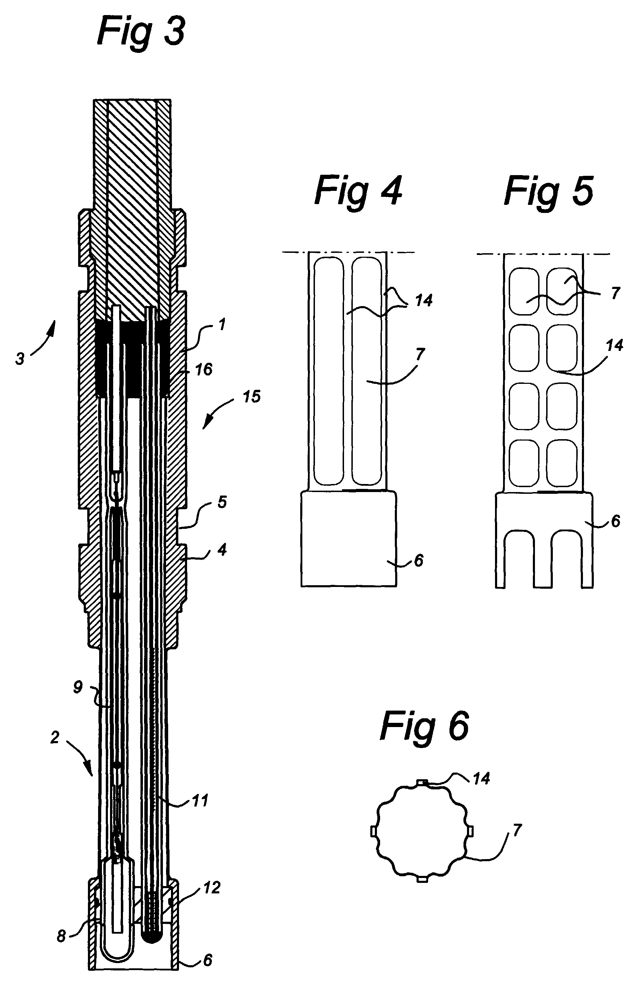

Figure 3 shows a cross-sectional view of a pH sensor 15 provided with a sensor housing 1 according to the invention. The pH sensor 15 comprises the above-described electrodes 9, 10, 11, of which the reference electrode 10 is located behind the glass electrode 9 and temperature and liquid-earth sensor 11 and is therefore not visible in this cross-sectional view.

The pH sensor 15 shown in Figure 3 makes use, as described above, of a thickened electrolyte, so that topping-up of the reference electrolyte, and consequently maintenance, will be reduced. If the electrolyte is not thickened, it will leak away relatively rapidly, thus shortening the service life of the pH sensor 15. A temperature increase of the process fluid will cause an increase in volume of the electrolyte. If the temperature coefficient of the sensor housing material is such that the increase in the internal volume is less than that of the electrolyte volume, this will lead to a significant pressure build-up within the sensor housing, which may lead to fractures or cracks in the sensor housing 1 and immediately or soon after lead to failure of the pH sensor 15. The high pressure may also force the porous seal 8 out of the housing 1. This results in loss of electrolyte. If even a small amount of electrolyte is lost, however, any subsequent drop in temperature will produce a negative pressure within the sensor housing 1. This may cause the ingress of process fluid, resulting in contamination of the electrolyte, which in turn leads to a significantly shorter service life of the pH sensor 15.

By virtue, however, of the sensor housing 1 being provided with deformable wall sections 7, the increase in volume caused by an increase in temperature can be absorbed. The deformable wall sections are preferably disposed between the screw thread 4 and the protective collar 6 and during operation are therefore in contact with the process fluid. The deformable wall sections 7 will transmit the pressure of the process fluid to the electrolyte, the pressure on both sides of the porous seal 8 being equal as a result. Consequently, the pH sensor 15 comprising a sensor housing 1 according to the present invention is resistant to variations both in temperature and in pressure.

Figure 4 shows a side view of part of the sensor housing according to an embodiment of the present invention. Disposed in the longitudinal direction of the sensor housing on that part of the sensor housing 1 where the deformable sections 7 are located are bracing ribs 14. This results in greater strength of the sensor housing 1, whilst expansion or compression of the volume within the sensor housing 1 remains possible by virtue of the deformable sections 7. As a result of the greater strength of the sensor housing 1, the risk of damage to the electrodes 9, 10, 11 present therein when the sensor is handled and installed will be reduced.

Figure 5 shows a side view of part of the sensor housing according to a further embodiment of the present invention. Here, the deformable sections 7 are surrounded by criss-crossing bracing ribs 14. Whilst it is evident that the degree of expansion and compression of the sensor housing in this embodiment is more restricted, an adequate effect can be achieved by a correct choice of dimensions and thickness of the material in the deformable sections. It will be evident to those skilled in the art that other embodiments of the deformable sections 7 and bracing ribs 14 are possible. The protective collar 6 in Figure 5 takes the form of a number of projecting teeth. This promotes the flow of process fluid around the electrodes, whilst at the same time affording adequate protection of the electrodes.

Figure 6 shows a cross-sectional view of the sensor housing 1 shown in Figure 4 along the line VI-VI. This clearly indicates that the deformable sections 7 are formed by corrugated sections of thin material, and the bracing ribs 14 are formed by thicker sections of the material. These corrugated deformable sections 7 can be corrugated in such a way that the sensor housing can be fabricated in a simple manner with the aid of moulds by means of injection-moulding or other techniques. It will be evident to those skilled in the art that the deformable sections 7 can also be fashioned in other ways, for example corrugated sections running perpendicular to the longitudinal direction of the sensor housing 1.

The sensor housing 1 is preferably fabricated from one material, thus avoiding vulnerable junctions between different materials and enabling simple fabrication. In addition, the sensor housing 1 is preferably made in one piece, which means that junctions will no longer be present in the sensor housing. As a result, the design of the sensor housing 1 is inherently stronger and there is less risk of leakage, fracture or cracks at junctions. Preferably, the sensor housing 1 is fabricated from a material which is resistant to the action of the most common process fluids. An example of a suitable material having the desired characteristics is the plastic PVDF, which is resistant to chemicals and belongs to the group of fluoropolymers, which are resistant to chemicals. At the same time, it would be possible, for applications requiring a less extensive range, to fabricate the sensor housing from e.g. polypropylene or other common plastics. In an alternative embodiment of the sensor housing 1, the material of the sensor housing, with the exception of the deformable sections, has a stiffening material such as glass added thereto. The combination of a glass-filled material for the sensor housing 1 and a pure material ("virgin material") for the deformable sections 7 results in a rugged, robust sensor housing 1 having the advantages of the variable internal volume provided by the deformable sections 7.

Preferably, the sensor housing 1 is fabricated with the aid of an injection-moulding procedure. This allows the sensor housing 1 to be fabricated in one piece, the deformable sections 7 having a thickness of at most 0.50 mm, e.g. 0.25 mm, being formed at the same time. Alternatively, the sensor housing 1 can be fabricated with the aid of a vacuum-forming technique. As noted above, the deformable sections 7 can be formed simultaneously with the fabrication of the sensor housing 1 or in a further procedural step, in which the deformable sections 7 are formed by partial removal of material.

## Claims

1. Sensor housing for accommodating at least one electrode which can be brought into electrochemical contact with a process fluid via a porous opening by which an inner chamber is formed between an internal surface of the sensor housing and the external surface of the at least one electrode, the inner chamber being able to be filled with a first electrolyte, characterized in that the sensor housing (1) comprises deformable sections (7) so that the volume of the inner chamber is variable.

2. Sensor housing according to Claim 1, characterized in that the sensor housing (1) including the deformable sections (7) is made of one material.

3. Sensor housing according to Claim 2, characterized in that the material of the sensor housing (1), with the exception of the deformable sections (7), has a stiffening material added thereto.

4. Sensor housing according to Claims 1, 2 or 3, characterized in that the sensor housing (1) including the deformable sections (7) is made in one piece.

5. Sensor housing according to any one of the preceding claims, characterized in that the deformable sections (7) are located on that section of the sensor housing (1) which during operation comes into contact with the process fluid.

6. Sensor housing according to any one of the preceding claims, characterized in that the sensor housing (1), adjoining the deformable sections (7), is provided with bracing ribs (14).

7. Sensor housing according to any one of the preceding claims, characterized in that the deformable sections (7) are formed by local attenuations of the wall of the sensor housing (1).

8. Sensor housing according to any one of the preceding claims, characterized in that the material of which the sensor housing (1) is made is resistant to chemicals.

9. Sensor housing according to Claim 8, characterized in that the material is plastic, e.g. PVDF.

10. Sensor housing according to any one of the preceding claims, characterized in that the deformable section (7) has a maximum thickness of 0.50 mm, and preferably has a thickness of 0.25 mm.

11. Sensor provided with a sensor housing according to any one of Claims 1 to 10 inclusive, which is further provided with a reference electrode (10) which is located in the inner chamber of the sensor housing (1).

12. Sensor according to Claim 11, which further comprises a glass electrode (9) which is in direct contact with the process fluid, in order to measure the pH of a process fluid.

13. Sensor according to Claims 11 or 12, characterized in that the sensor (15) is additionally provided with a temperature sensor (11) disposed in the sensor housing (1).

14. Sensor according to Claims 11, 12 or 13, characterized in that the sensor (15) is additionally provided with a liquid-earth electrode (11) which is disposed in the sensor housing (1) and can come into direct contact with the process fluid.

15. Method of fabricating a sensor housing according to Claims 1 to 10 inclusive, characterized in that the sensor housing (1) is fabricated via an injection-moulding procedure.

16. Method of fabricating a sensor housing according to Claims 1 to 10 inclusive, characterized in that the sensor housing (1) is fabricated via a vacuum-forming method.

17. Method of fabricating a sensor housing according to Claims 1 to 10 inclusive, characterized in that the deformable sections (7) of the sensor housing (1) are fabricated by partial removal of the material.

18. Method for fabricating a sensor housing according to Claims 1 to 10 inclusive, characterized in that the deformable sections (7) of the sensor housing (1) are introduced in a further procedural step by making use of welding techniques.

19. Method for fabricating a sensor housing according to Claims 1 to 10 inclusive, characterized in that the deformable sections (7) of the sensor housing (1) are introduced in a further procedural step by making use of bonding techniques.
